(19) Europäisches Patentamt
European Patent Office
Office européen des brevets

(11) **EP 2 648 330 A1**

(12) **DEMANDE DE BREVET EUROPEEN**

(43) Date de publication:
**09.10.2013 Bulletin 2013/41**

(51) Int Cl.:
**H02P 1/18** (2006.01)   *F02N 11/08* (2006.01)

(21) Numéro de dépôt: **13161519.7**

(22) Date de dépôt: **28.03.2013**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **05.04.2012 FR 1253177**

(71) Demandeur: **VALEO EQUIPEMENTS ELECTRIQUES MOTEUR 94046 Créteil (FR)**

(72) Inventeurs:
• **Labbe, Nicolas**
  **69003 LYON (FR)**
• **Bernard, François-Xavier**
  **94000 CRETEIL (FR)**
• **Baudesson, Philippe**
  **27220 LA BOISSIERE (FR)**
• **Thimon, Alain**
  **93230 ROMAINVILLE (FR)**
• **Gauger, Solenne**
  **94100 SAINT MAUR DES FOSSES (FR)**

(54) **Procédé de commande d'un démarreur de moteur thermique de véhicule automobile, dispositif de commande et démarreur correspondants**

(57)   Le procédé selon l'invention est du type de ceux consistant à contrôler une intensité (1) d'un courant d'alimentation d'un moteur électrique (5) à commutateur mécanique du démarreur en fonction au moins d'un ordre de démarrage. Conformément à l'invention, l'intensité (1) est asservie de manière à ce qu'une puissance commutante soit égale à une limite de commutation prédéterminée dans une plage de fonctionnement prédéterminée. Selon une caractéristique particulière, l'intensité (1) est asservie à une vitesse de rotation du moteur électrique selon au moins une première loi hyperbolique. Selon une autre caractéristique particulière, l'intensité (1) est asservie à une force électromotrice (f.e.m.) du moteur électrique (5) selon au moins une seconde loi hyperbolique (7).

**FIG. 2**

EP 2 648 330 A1

## Description

### DOMAINE TECHNIQUE DE L'INVENTION.

De manière générale, l'invention concerne le domaine des démarreurs électriques de moteurs thermiques dans les véhicules automobiles. Plus particulièrement, l'invention concerne un procédé de commande d'un démarreur, ainsi que le dispositif de commande correspondant. Elle concerne aussi un démarreur comprenant un tel dispositif de commande.

### ARRIERE PLAN TECHNOLOGIQUE DE L'INVENTION.

Lors de la mise sous tension d'un démarreur pour assurer le démarrage du moteur thermique du véhicule, il se produit un courant d'appel important qui est proche du niveau de courant de court-circuit du démarreur, à savoir, un courant de l'ordre de 1000 Ampères. Ce courant décroît ensuite en intensité à mesure que l'induit du démarreur, correspondant au rotor de la machine, monte en vitesse.

Une telle intensité initiale impose des contraintes de conception importantes sur le circuit électrique de puissance alimentant le démarreur, notamment sur le contacteur électromagnétique et le moteur électrique du démarreur.

Afin de contrôler et limiter le pic de courant en régime transitoire, il est connu d'insérer divers éléments passifs dans le circuit de puissance tels qu'une résistance de démarrage ou un élément inductif.

Ces solutions donnent en général satisfaction dans des circonstances normales d'utilisation d'un démarreur conventionnel alimenté par une batterie de 12 V, c'est-à-dire quand le démarreur est lancé pour une durée brève au moment où le conducteur du véhicule actionne la clé de contact.

Il en est différemment en cas de démarrage difficile, notamment quand le moteur thermique est très froid, que l'alimentation en carburant est déficiente ou qu'il existe une avarie quelconque sur le véhicule.

Dans ces circonstances, il arrive que l'utilisateur fasse de multiples tentatives de démarrage successives dans l'espoir de faire démarrer le moteur thermique.

Des paramètres "pire cas", qui ont été déterminés à partir des contraintes de démarrage à froid, peuvent être dépassés, et un effet cumulatif d'échauffement peut conduire à la destruction du démarreur.

Des solutions visant à protéger un démarreur conventionnel en cas de démarrages difficiles sont connues de l'état de la technique. Par exemple, le dispositif pour la commande d'un démarreur de véhicule automobile divulgué dans la demande de brevet FR2770349 temporise les ordres de démarrage, et bloque la commande de l'alimentation du moteur électrique en fonction d'un ou de plusieurs paramètres de fonctionnement du démarreur et/ ou du moteur thermique.

Le développement des véhicules hybrides fait apparaître de nouvelles contraintes sur les démarreurs.

En effet, ces véhicules, bien qu'utilisant deux sources de propulsion, l'une thermique et l'autre électrique, nécessitent un équipement supplémentaire pour assurer le démarrage ou le redémarrage du moteur thermique dans certain cas :

- premier démarrage à froid;
- redémarrage du moteur thermique lorsque le véhicule est en mode tout électrique (mode dit "ZEV" en terminologie anglaise) pour éviter les à-coups de couple et une chute de la vitesse que provoquerait alors le démarrage du moteur thermique par le moteur électrique.

Aujourd'hui cette fonction est généralement assurée par un démarreur 12 V ou un alterno-démarreur 12 V.

Les problèmes présentés par ces types d'architectures et de solutions sont de deux ordres :

- la batterie 12 V doit être dimensionnée pour permettre les démarrages par temps froid, ce qui amène à la surdimensionner. Il y a donc deux batteries aux cahiers des charges très contraignants, l'une pour les équipements haute tension comme le moteur électrique de traction et le compresseur de climatisation, et l'autre pour le réseau basse tension et l'alimentation du démarreur. On notera que les termes « haute tension » se réfèrent ici à des tensions supérieures à 14 V.
- sur un véhicule hybride permettant des roulages en tout électrique, il peut être nécessaire de faire redémarrer le moteur thermique pour répondre à une demande de forte accélération. Les performances de démarrage alors demandées se trouvent très largement supérieures, en termes de couple et de puissance, à ce que permettent les démarreurs 12 V de types restant compatibles avec l'espace disponible sous le capot moteur. De plus, le moteur électrique de traction étant en utilisation, il ne peut être utilisé pour démarrer le moteur thermique sans générer des à-coups de couple et d'accélération au moment de l'accouplement au moteur thermique qui est alors à l'arrêt.

Il existe donc un besoin pour des démarreurs de hautes performances alimentés par la batterie haute tension du véhicule, par exemple une batterie lithium-ion d'une tension de 120 V.

Mais, on conçoit facilement que les contraintes que doit supporter un démarreur 120 V au moment du démarrage, et notamment en cas de démarrage difficile, soient encore bien supérieures à celles supportées par un démarreur 12 V conventionnel.

Dans le cas d'un moteur électrique à courant continu de type classique à collecteur et balais, il est apparu qu'une alimentation conventionnelle du moteur électrique n'était pas compatible avec l'exigence de puissance à fournir dans un régime transitoire de montée en vitesse, d'une part, et avec la tenue de ce collecteur et de ces balais aux arcs électriques, d'autre part.

## DESCRIPTION GENERALE DE L'INVENTION.

La présente invention vise donc un procédé et un dispositif de commande d'un démarreur de moteur thermique de véhicule automobile permettant de pallier les inconvénients des solutions connues de l'état de la technique qui ont été rappelés ci-dessus, et d'optimiser le fonctionnement d'un démarreur, notamment d'un démarreur haute tension de véhicule hybride.

Le procédé dont il s'agit est du type de ceux consistant à contrôler une intensité d'un courant d'alimentation d'un moteur électrique à commutateur mécanique de ce démarreur en fonction au moins d'un ordre de démarrage.

Le procédé selon l'invention est remarquable en ce que cette intensité est asservie de manière à ce que la puissance commutante, ou puissance commutée définie par le produit 1 x f.e.m, soit égale à une limite de commutation prédéterminée dans une plage de fonctionnement prédéterminée.

Cette intensité est avantageusement asservie à une vitesse de rotation du moteur électrique selon au moins une première loi hyperbolique ou à une force électromotrice du moteur électrique selon au moins une seconde loi hyperbolique.

La force électromotrice du moteur électrique est fort avantageusement estimée par la relation:

$$f.e.m = V - R*I - L*dI/dt$$

où V est une tension d'alimentation du moteur électrique, et R et L sont respectivement une résistance interne et une self des enroulements de ce moteur électrique.

La fixation de l'intensité I selon une loi hyperbolique du type I=K1/f.e.m ou I=K2/$\Omega$, avec K1, K2 et $\Omega$ étant respectivement des constantes et la vitesse de rotation du démarreur, permet de faire fonctionner le démarreur à un niveau maximal acceptable de puissance commutante. Le démarreur fournit ainsi le plus possible de puissance mécanique sans risque de détérioration du collecteur de son moteur électrique.

Dans le procédé selon l'invention, l'intensité du courant d'alimentation du moteur électrique dépend en outre de préférence d'une première température du moteur thermique et/ou d'une seconde température de composants électroniques de puissance associés au moteur électrique.

La limite de commutation prédéterminée dépend avantageusement de cette première température et/ou de cette seconde température.

L'invention concerne aussi un dispositif de commande d'un démarreur d'un moteur thermique de véhicule automobile apte à la mise en oeuvre du procédé décrit ci-dessus.

Ce dispositif de commande est du type de ceux comprenant des moyens de contrôle d'une intensité d'un courant d'alimentation d'un moteur électrique à commutation mécanique de ce démarreur et des moyens d'interface destinés à recevoir au moins un ordre de démarrage.

Ce dispositif de commande est remarquable en ce qu'il comprend en outre:

- des moyens d'acquisition de variables de fonctionnement constituées par l'intensité du courant d'alimentation et une tension d'alimentation du moteur électrique, ou bien une vitesse de rotation dudit moteur électrique, d'une part, et une première température dudit moteur thermique et/ou une seconde température de composants électroniques de puissance associés au moteur électrique, d'autre part;
- des moyens de mémorisation d'au moins une loi d'asservissement à puissance commutante constante de l'intensité du courant d'alimentation;
- des moyens d'asservissement de cette intensité en fonction de ces variables de fonctionnement selon au moins cette loi d'asservissement.

Les moyens de contrôle de l'intensité du courant d'alimentation sont constitués de préférence par un hacheur série piloté par les moyens  d'asservissement de l'intensité du courant d'alimentation.

Dans le dispositif de commande selon l'invention, les moyens d'acquisition comprennent avantageusement un premier capteur de l'intensité du courant d'alimentation et un second capteur d'une tension d'alimentation du moteur électrique, et les moyens de mémorisation contiennent en outre des données représentatives d'une résistance interne et d'une self du moteur électrique.

L'invention concerne également un démarreur d'un moteur thermique de véhicule automobile, remarquable en ce qu'il comporte le dispositif de commande décrit précédemment.

Ces quelques spécifications essentielles auront rendu évidentes pour l'homme de métier les perspectives offertes par l'invention concernant:

- une utilisation d'une batterie haute tension pour le démarrage sans contrainte supplémentaire nécessitant un surdimensionnement de cette batterie haute tension;
- une fourniture par le démarreur d'un couple d'entraînement important au début du démarrage tout en limitant les phénomènes d'arcs au niveau des balais à mesure que la vitesse de rotation augmente;
- de manière générale, un accroissement des performances du démarreur.

Les spécifications détaillées de l'invention sont données dans la description qui suit en liaison avec les dessins ci-annexés. Il est à noter que ces dessins n'ont d'autre but que d'illustrer le texte de la description et ne constituent en aucune sorte une limitation de la portée de l'invention.

**BREVE DESCRIPTION DES DESSINS.**

La **Figure 1** est une comparaison de la tenue en commutation d'un démarreur basse tension et d'un démarreur haute tension.

La **Figure 2** est un schéma de principe d'une première boucle d'asservissement d'une intensité d'un courant d'alimentation d'un démarreur à puissance commutante constante selon l'invention, sans correction de force électromotrice.

La **Figure 3** est un schéma de principe d'une seconde boucle d'asservisement d'une intensité d'un courant d'alimentation d'un démarreur à puissance commutante constante selon l'invention, avec correction de force électromotrice.

Les **Figures 4a, 4b et 4c** montrent des premiers exemples de lois d'asservissement, dans une première plage de fonctionnement, d'une intensité d'un courant d'alimentation d'un démarreur à puissance commutante égale à des premières limites de commutation prédéterminées décroissantes pour des températures de fonctionnement du moteur thermique croissantes, une première intensité initiale étant constante.

Les **Figures 5a, 5b et 5c** montrent des seconds exemples de lois d'asservissement, dans une seconde plage de fonctionnement, d'une intensité d'un courant d'alimentation d'un démarreur à puissance commutante égale à une seconde limite de commutation prédéterminée constante pour des températures de fonctionnement du moteur thermique croissantes, une seconde intensité initiale décroissant avec ces températures de fonctionnement..

La Figure 6 est un schéma de principe d'un mode de réalisation préféré d'un dispositif de commande d'un démarreur d'un moteur thermique de véhicule automobile selon l'invention.

**DESCRIPTION DES MODES DE REALISATION PREFERES DE L'INVENTION.**

Dans la conception d'un démarreur à courant continu à commutation mécanique apte à être alimenté par une batterie haute tension, l'une des contraintes est la tenue du collecteur et des balais, ainsi que cela a été indiqué en préambule.

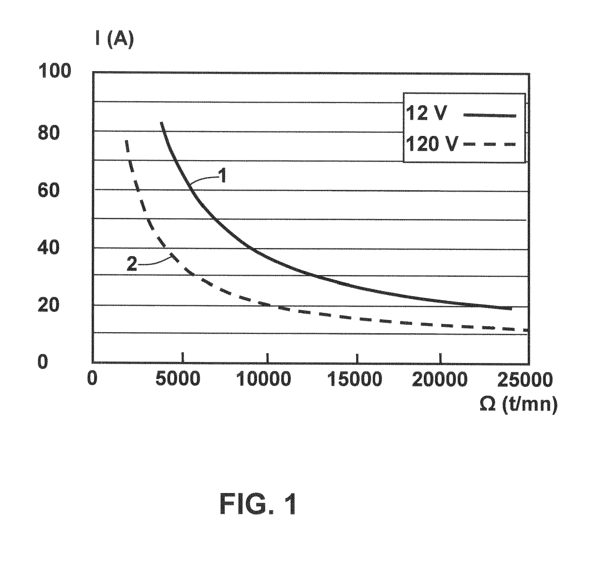

La **Figure 1** montre l'intensité du courant d'alimentation I qui est admissible en fonction de la vitesse de rotation $\Omega$ pour un démarreur 12 V (courbe en trait plein 1) et pour un démarreur 120 V (courbe en trait pointillé 2) de manière à ce que des critères de commutation soient satisfaits.

On constate que, pour une vitesse de rotation Q donnée, l'intensité admissible pour un démarreur 12 V et supérieure à celle admissible pour un démarreur 120 V.

Cette remarque et la forme hyperbolique des courbes suggèrent que les critères de commutation sont satisfaits à puissance commutante constante, la force électromotrice f.e.m du moteur électrique étant proportionnelle à sa vitesse de rotation $\Omega$ (par la constante de force électromotrice Ke).

En application de ce principe, le procédé de commande d'un démarreur d'un moteur thermique de véhicule automobile selon l'invention asservit l'intensité du courant d'alimentation I à la vitesse de rotation $\Omega$ du moteur électrique selon au moins une première loi hyperbolique.

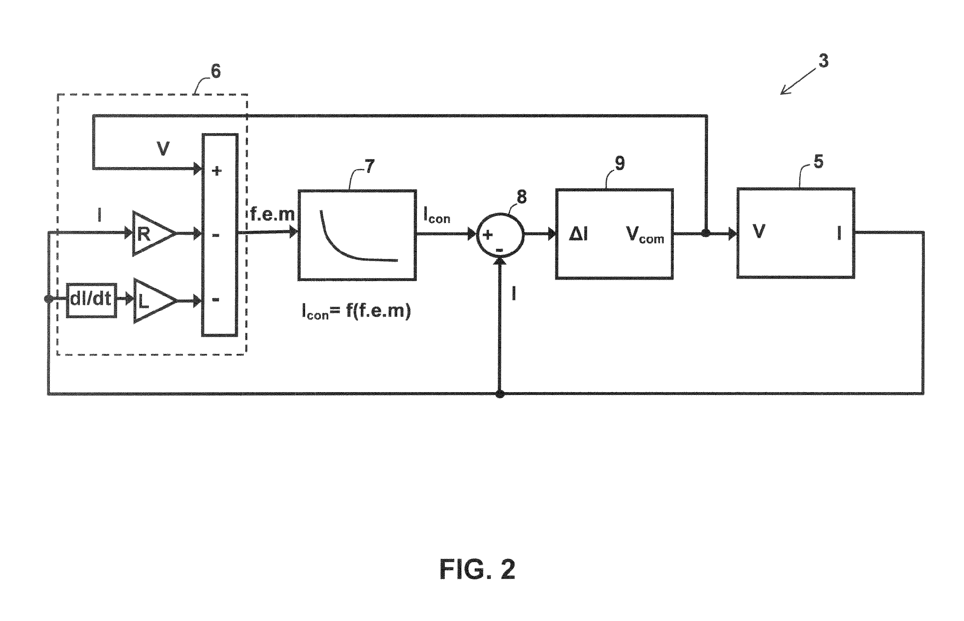

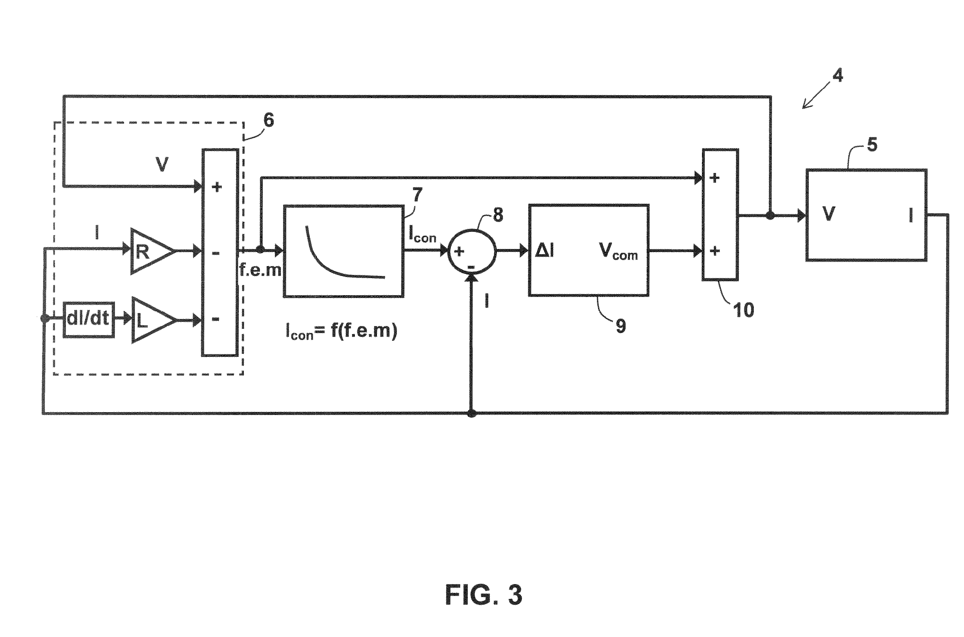

Alternativement, le procédé de commande d'un démarreur d'un moteur thermique de véhicule automobile selon l'invention asservit l'intensité du courant d'alimentation I à la force électromotrice f.e.m du moteur électrique selon au moins une seconde loi hyperbolique au moyen de boucles d'asservissement 3, 4 représentées en détail sur les **Figures 2 et 3.**

La force électromotrice f.e.m est estimée par les boucles d'asservissement 3; 4 à partir de la tension d'alimentation V du moteur électrique 5, de l'intensité d'alimentation I, d'une la dérivée di/dt de cette intensité I, ainsi que d'une résistance interne R et d'une self L des enroulements du moteur électrique 5 par la relation (premier module de calcul spécifique 6):

$$f.e.m = V - R*I - L*dI/dt$$

L'intensité de consigne $I_{con}$ est déduite de cette valeur par la relation:

$$I_{con} = f(f.e.m)$$

où f est une loi hyperbolique (second module de calcul spécifique ou tabulation 7).

Dans la première boucle d'asservissement 3 montrée sur la Figure 2, le calcul 8 de l'erreur $\Delta I = I_{con} - I$ permet à un module correcteur 9 de calculer une tension de commande $V_{com}$ qui est appliquée sur le moteur électrique 5.

Dans la seconde boucle d'asservissement 4 montrée sur la **Figure 3,** la tension de commande $V_{com}$ calculée par le module correcteur 9 est compensée par la force électromotrice f.e.m.

De préférence, le module correcteur est de type P, PI, PID, $PI^2$, etc. (actions proportionnelle, intégrale, dérivée...).

Le procédé de pilotage de l'intensité 1 du courant d'alimentation du démarreur en fonction de la montée en vitesse permet d'améliorer la durée de vie des balais.

Cet avantage est de préférence amplifié en tenant compte des besoins fonctionnels réels du moteur thermique auquel le démarreur est accouplé.

En effet, il a été rappelé en préambule que les paramètres pris en compte pour la détermination du ou des profils de courant au moment du démarrage était la puissance maximale à délivrer par rapport à des circonstances "pire cas".

Ainsi, pour assurer le démarrage du moteur thermique dans toutes les conditions d'utilisation, on est amené à dimensionner le démarreur pour délivrer dans tous les cas un couple supérieur ou égal à celui nécessaire à froid, qui est généralement le pire cas.

Ensuite, en fonction des conditions réelles de température, le démarrage s'effectue plus ou moins vite.

L'entité inventive a déterminé que ce dimensionnement par rapport aux conditions grand froid entraînait alors aux températures supérieures des contraintes bien supérieures au strict nécessaire pour le démarrage du moteur thermique (pic de courant sur la batterie, contraintes mécaniques liées aux couples importants générés,...).

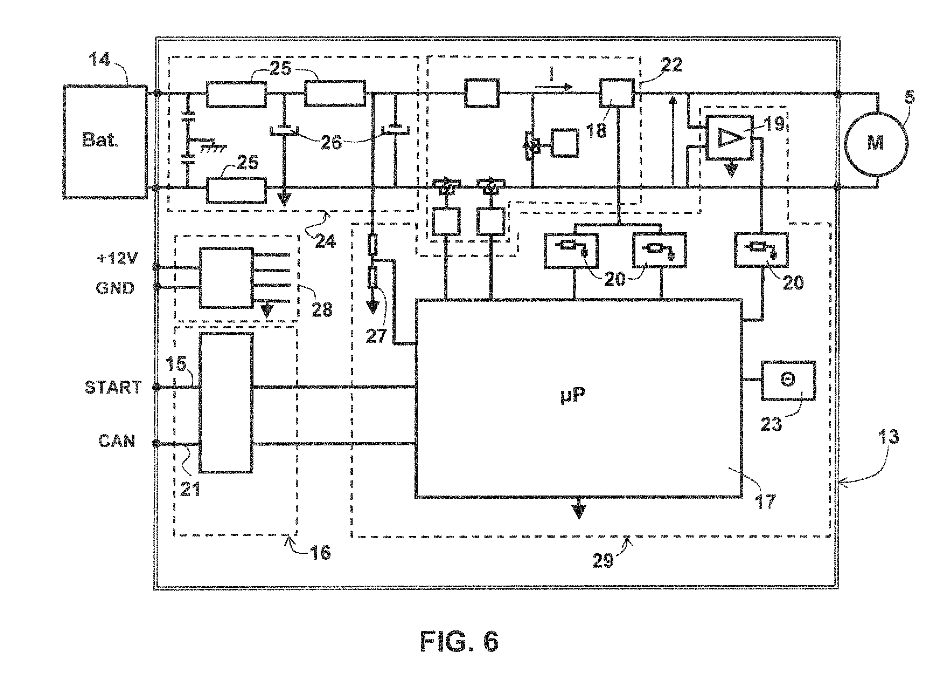

Cette contrainte de démarrage à froid devient aussi une contrainte majeure pour la sélection des interrupteurs de puissance d'un dispositif de commande du démarreur du type montré sur la **Figure 6**.

En effet, le dimensionnement de ces interrupteurs requiert de ne pas dépasser une température maximum au centre de la puce. Fournir le même couple à froid qu'à chaud impose de calculer la puissance maximum pouvant être dissipée par les interrupteurs lorsque le dissipateur de l'interrupteur est à sa température maximum. Cette contrainte amène à un surdimensionnement de la surface de silicium de l'interrupteur par rapport aux besoins nominaux.

Le procédé de commande d'un démarreur de moteur thermique de véhicule automobile selon l'invention permet d'éviter ces inconvénients en asservissant en outre l'intensité du courant d'alimentation à une première température du moteur thermique.

Ainsi, lorsque le moteur thermique demande une puissance ou couple important pour être lancé, c'est-à-dire à froid, une seconde température du dissipateur sera elle aussi basse et les interrupteurs capables de commuter des courants plus importants.

L'intégration de cette première température du moteur thermique dans les paramètres de pilotage du démarreur permet, en plus de l'optimisation des interrupteurs, d'améliorer le système global en maîtrisant le courant débité par la batterie, en réduisant les chutes de tension sur le réseau électrique du véhicule, et en limitant les contraintes de dimensionnement des câbles de puissance à chaud en cas de démarrage difficile.

A chaud, le moteur thermique est plus facile à démarrer et requiert donc moins de couple et de puissance. C'est justement à ce moment que les interrupteurs ne sont plus capables de commuter des courants très importants.

L'acquisition de la première température du moteur thermique et/ ou d'une seconde température du boîtier régulateur de courant permet à des boucles d'asservissement adaptées de régler l'intensité de consigne $I_{con}$ au juste nécessaire et ainsi d'optimiser la surface de silicium au juste nécessaire en prenant en compte les besoins fonctionnels à chaud et à froid du moteur thermique.

La première température du moteur thermique est généralement disponible sur un bus de terrain du véhicule, habituellement de type CAN.

L'asservissement de l'intensité d'alimentation I du moteur électrique est réalisé de plusieurs manières, simultanément ou alternativement, par exemple :

- sélection en fonction de la première température du moteur thermique d'une loi d'asservissement particulière, parmi un ensemble de lois d'asservissement enregistrées, comprenant un asservissement à puissance commutante constante dans une plage de fonctionnement prédéterminée;

- modification d'une loi d'asservissement générale en fonction de la première température du moteur thermique, par exemple en rendant dépendante de cette première température une limite de commutation prédéterminée à laquelle est égale la puissance commutante, ainsi que la plage de fonctionnement à puissance commutante constante.

- limitation de l'intensité maximum du courant d'alimentation du démarreur en fonction de la première température du moteur thermique, en dehors de la plage de fonctionnement prédéterminée, généralement l'intensité initiale $I_o$ au démarrage.

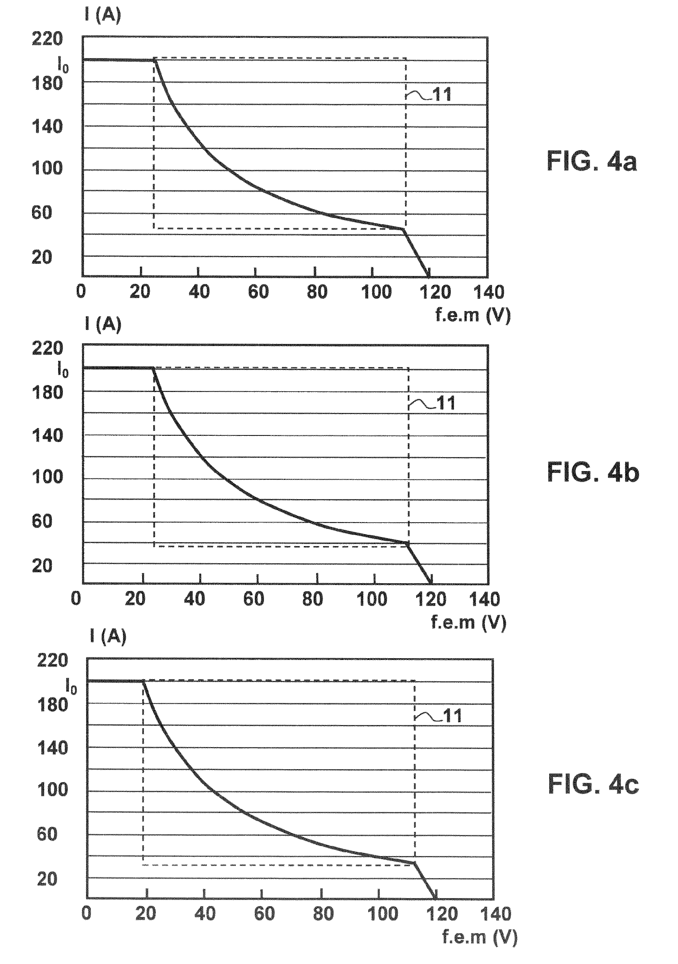

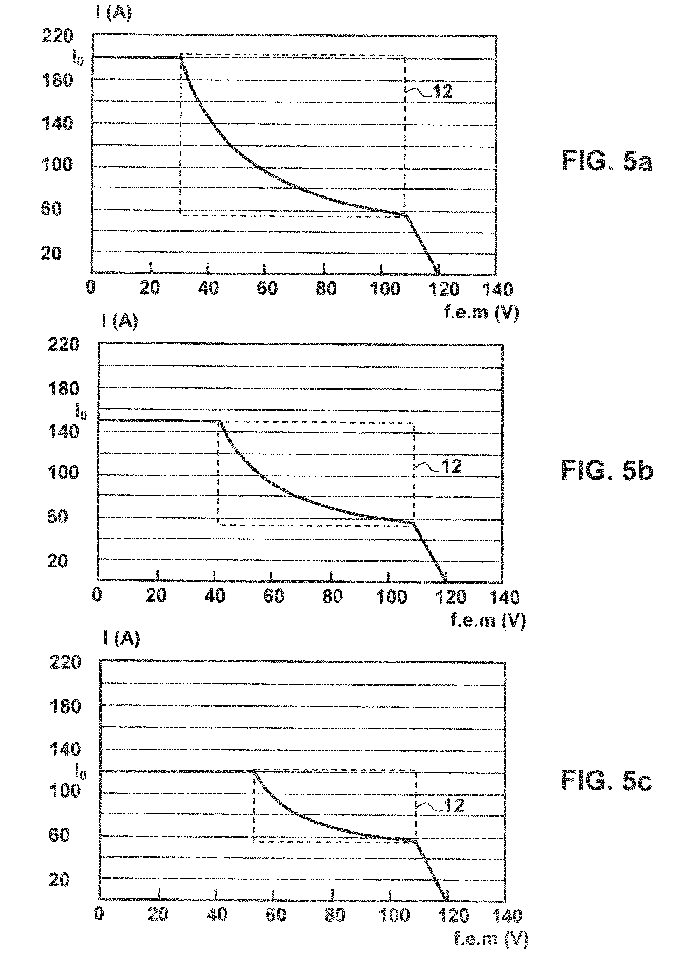

Les **Figures 4a, 4b, et 4c**, d'une part, et les **Figures 5a, 5b et 5c,** d'autre part, illustrent respectivement la modification d'une loi d'asservissement générale et la limitation de l'intensité maximum du courant d'alimentation en fonction de la première température du moteur thermique.

Sur la **Figure 4a**, la première température est inférieure à 0° C et une première intensité initiale $I_o$ est 200 A. Dans une première plage de fonctionnement prédéterminée 11, l'intensité 1 évolue de manière à ce que la puissance commutante soit égale à une première limite de commutation prédéterminée P= 6 kW.

Sur la **Figure 4b,** la première température est comprise entre 0° C et 90° C et la première intensité initiale $I_o$ reste égale à 200 A. Dans la première plage de fonctionnement prédéterminée 11, l'intensité I évolue de manière à ce que la puissance commutante soit égale à une autre première limite de commutation prédéterminée inférieure à la précédente, valant P'= 5 kW.

Sur la **Figure 4c**, la première température est comprise entre 90° C et 125° C et la première intensité initiale $I_O$ reste égale à 200 A. Dans la première plage de fonctionnement prédéterminée 11, l'intensité I évolue de manière à ce que la puissance commutante soit égale à une première limite de commutation prédéterminée encore différente et inférieure à la précédente, valant P"= 4 kW.

Dans ces premiers exemples, la première plage de fonctionnement prédéterminée 11 est sensiblement indépendante de la première température.

Sur la **Figure 5a,** la première température est inférieure à 0° C et une seconde intensité initiale $I_O$ est 200 A. Dans une seconde plage de fonctionnement prédéterminée 12, l'intensité 1 évolue de manière à ce que la puissance commutante soit égale à une seconde limite de commutation prédéterminée P= 6 kW.

Sur la **Figure 5b,** la première température est comprise entre 0° C et 90° C et la seconde intensité initiale $I_O$ devient égale à 150 A. Dans la seconde plage de fonctionnement prédéterminée 12, l'intensité I évolue de manière à ce que la puissance commutante reste égale à la seconde limite de commutation prédéterminée, valant P= 6 kW.

Sur la **Figure 5c,** la première température est comprise entre 90° C et 125° C et la seconde intensité initiale $I_O$ devient égale à 120 A. Dans la seconde plage de fonctionnement prédéterminée 12, l'intensité I évolue de manière à ce que la puissance commutante reste aussi égale à la seconde limite de commutation prédéterminée, valant P= 6 kW.

Dans ces seconds exemples, la seconde plage de fonctionnement prédéterminée 12 diminue au fur et mesure que la première températue croît.

Le procédé de commande d'un démarreur d'un moteur thermique de véhicule automobile selon l'invention est de préférence mis en oeuvre par le dispositif de commande représenté sur la **Figure 6.**

Ce dispositif 13 se présente sous la forme d'un boîtier électronique 13 intercalé entre la batterie 14 et le moteur électrique à courant continu 5 du démarreur.

Le boîtier électronique 13 comporte une entrée de validation du démarrage 15 qui transmet l'ordre de démarrage START au reste du dispositif 13 par l'intermédiaire d'un circuit d'isolation et d'interface 16.

Un microcontrôleur 17 acquiert périodiquement des valeurs de l'intensité I et de la tension V d'alimentation au moyen, respectivement, de premier 18 et second 19 capteurs.

Les mesures sont filtrées par des filtres 20 avant numérisation par le microcontrôleur 17.

Les valeurs numérisées de l'intensité I et de la tension V sont traitées par le microprocesseur 17 et permettent d'obtenir une estimation de la force électromotrice f.e.m du moteur électrique 5 en fonction de la résistance interne R et de la self L des enroulements du moteur électrique 5, comme il a été expliqué ci-dessus en liaison avec les **Figures 2 et 3.**

Les boucles d'asservissement 3, 4, paramétrées de préférence par la première température du moteur thermique transmise par le bus de terrain 21, sont effectuées par le microcontrôleur 17 qui contrôle l'intensité d'alimentation I en pilotant les commutateurs à semiconducteur d'un hacheur série 22.

Alternativement ou simultanément, les boucles d'asservissement 3, 4 sont paramétrées par la seconde température $\Theta$ du dissipateur thermique du boîtier électronique 13 acquise au moyen d'un senseur de température 23.

Si l'architecture du véhicule rend disponible une mesure de vitesse de rotation $\Omega$ du moteur électrique 5 sur le bus de terrain 21, son acquisition par le microprocesseur 17 rend avantageux un asservissement de l'intensité I en fonction de cette vitesse de rotation $\Omega$.

Le boîtier électronique 13 comprend aussi des moyens de filtrage 24 d'une tension de batterie 14 constitués par des éléments inductifs 25 et des capacités 26.

La tension de batterie 14 est échantillonnée par le microcontrôleur 17 par l'intermédiaire d'un pont diviseur 27.

Le boîtier électronique 13 dispose d'une alimentation auxiliaire 28 interne fournissant les différents niveaux de tension nécessaires à son fonctionnent à partir d'un réseau basse tension de 12 V.

Comme il va de soi, l'invention ne se limite pas aux seuls modes d'exécution préférentiels décrits ci-dessus.

L'ensemble de régulation 29 constitué par le microcontrôleur 17 et les moyens d'acquisition 18, 19, 20, 21, 23 des variables de fonctionnement I, V, $\Theta$ présente en variante des architectures différentes de celle spécifiée ci-dessus ou représentée.

Les valeurs d'intensités, de tensions et de températures indiquées ne sont également données qu'à titre d'exemples.

L'invention est applicable aux tensions autres que 120 V. Par exemple, le temps de redémarrage à chaud avec un démarreur 12 V pourrait être amélioré considérablement en réalisant un accompagnement maximal du moteur thermique dans les phases de détente de gaz dans les cylindres, où se déclenche habituellement la roue libre du démarreur, et donc où le démarreur ne fournit pas de couple.

L'invention embrasse donc toutes les variantes possibles de réalisation dans la limite de l'objet des revendications ci-après.

**Revendications**

**1.** Procédé de commande d'un démarreur d'un moteur thermique de véhicule automobile du type de ceux consistant à contrôler une intensité (I) d'un courant d'alimentation d'un moteur électrique (5) à commutateur mécanique dudit démarreur en fonction au moins d'un ordre de démarrage (STAR), **caractéri-**

sé en ce que ladite intensité (I) est asservie de manière à ce qu'une puissance commutante soit égale à une limite de commutation prédéterminée dans une plage de fonctionnement prédéterminée (11, 12) et est asservie à une vitesse de rotation (Ω) dudit moteur électrique (5) selon au moins une première loi hyperbolique (1, 2) ou à une force électromotrice (f.e.m.) dudit moteur électrique (5) selon au moins une seconde loi hyperbolique (7).

2. Procédé de commande d'un démarreur d'un moteur thermique de véhicule automobile selon la revendication 1, **caractérisé en ce que** ladite force électromotrice (f.e.m) est estimée (6) par la relation:

$$f.e.m = V - R*I - L*dI/dt$$

où V est une tension d'alimentation dudit moteur électrique (5), et R et L sont respectivement une résistance interne et une self des enroulements dudit moteur électrique (5).

3. Procédé de commande d'un démarreur d'un moteur thermique de véhicule automobile selon l'une quelconque la revendication 1 ou 2 précédente, **caractérisé en ce que** ladite intensité (I) dépend en outre d'une première température dudit moteur thermique et/ou d'une seconde température (Θ) de composants électroniques de puissance associés audit moteur électrique (5).

4. Procédé de commande d'un démarreur d'un moteur thermique de véhicule automobile selon la revendication 3, **caractérisé en ce que** ladite limite de commutation prédéterminée dépend de ladite première température et/ou de ladite seconde température.

5. Dispositif de commande (1) d'un démarreur d'un moteur thermique de véhicule automobile apte à la mise en oeuvre du procédé selon l'une quelconque des revendications 1 à 4 précédentes, du type de ceux comprenant des moyens de contrôle d'une intensité (I) d'un courant d'alimentation d'un moteur électrique (5) à commutateur mécanique dudit démarreur et des moyens d'interface (16) destinés à recevoir au moins un ordre de démarrage (START), **caractérisé en ce qu'il** comprend en outre:

- des moyens d'acquisition (18, 19, 20, 21, 23) de variables de fonctionnement constituées par ladite intensité (I) et une tension d'alimentation (V) dudit moteur électrique (5), ou bien une vitesse de rotation (Ω) dudit moteur électrique (5), d'une part, et une première température dudit moteur thermique et/ou une seconde température (Θ) de composants électroniques de puissance associés audit moteur électrique (5), d'autre part;
- des moyens de mémorisation (17) d'au moins une loi d'asservissement (1, 2, 7) à puissance commutante constante de ladite intensité (I);
- des moyens d'asservissement (17) de ladite intensité (I) en fonction desdites variables de fonctionnement selon ladite au moins une loi d'asservissement (1, 2, 7).

6. Dispositif de commande (13) d'un démarreur d'un moteur thermique de véhicule automobile selon la revendication 5, **caractérisé en ce que** lesdits moyens de contrôle (22) sont constitués par un hacheur série (22) piloté par lesdits moyens d'asservissement (17).

7. Dispositif de commande (13) d'un démarreur d'un moteur thermique de véhicule automobile selon la revendication 5 ou 6 précédente, **caractérisé en ce que** lesdits moyens d'acquisition (18, 19, 20, 21, 23) comprennent un premier capteur (18) de ladite intensité (I) et un second capteur (19) d'une tension d'alimentation (V) dudit moteur électrique (5) et **en ce que** lesdits moyens de mémorisation (17) contiennent en outre des données représentatives d'une résistance interne et d'une self dudit moteur électrique (5).

8. Démarreur d'un moteur thermique de véhicule automobile, **caractérisé en ce qu'il** comporte un dispositif de commande (13) selon l'une quelconque des revendications 5 à 7 précédentes.

**FIG. 1**

FIG. 2

**FIG. 3**

FIG. 4a

FIG. 4b

FIG. 4c

FIG. 5a

FIG. 5b

FIG. 5c

FIG. 6

EP 2 648 330 A1

**EP 2 648 330 A1**

Europäisches
Patentamt
European
Patent Office
Office européen
des brevets

# RAPPORT DE RECHERCHE EUROPEENNE

Numéro de la demande

EP 13 16 1519

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2002/163197 A1 (KOELLE GERHARD [DE] ET AL) 7 novembre 2002 (2002-11-07) * alinéas [0002], [0008] - [0012], [0024] - [0037]; figures 1-2 * ----- | 1-8 | INV. H02P1/18 ADD. F02N11/08 |
| X | EP 2 148 084 A2 (BOSCH GMBH ROBERT [DE]) 27 janvier 2010 (2010-01-27) * alinéas [0002], [0003], [0028] - [0030], [0033], [0034], [0043], [0044]; figures 1-4 * ----- | 1,5,6,8 | |
| A | N. Mohan, T.M. Undeland, W.P. Robbins: "Power Electronics: converters, application and design", 1989, John Wiley & Sons Inc., XP002689551, ISBN: 0-471-50537-4 * page 286 - page 292 * * page 301 - page 306 * ----- | 1,2 | |
| A | US 2002/124825 A1 (ACKERMANN MANFRED [DE] ET AL) 12 septembre 2002 (2002-09-12) * alinéas [0007], [0015], [0016], [0029]; figures 1,3 * ----- | 1-8 | DOMAINES TECHNIQUES RECHERCHES (IPC) F02N H02P |
| A | US 3 965 403 A (OKADO CHIHIRO) 22 juin 1976 (1976-06-22) * le document en entier * ----- | 1-8 | |

Le présent rapport a été établi pour toutes les revendications

| Lieu de la recherche | Date d'achèvement de la recherche | Examinateur |
|---|---|---|
| Munich | 29 mai 2013 | Ossanna, Luca |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

14

**ANNEXE AU RAPPORT DE RECHERCHE EUROPEENNE
RELATIF A LA DEMANDE DE BREVET EUROPEEN NO.**

EP 13 16 1519

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

29-05-2013

| Document brevet cité au rapport de recherche | | Date de publication | Membre(s) de la famille de brevet(s) | | Date de publication |
|---|---|---|---|---|---|
| US 2002163197 | A1 | 07-11-2002 | DE<br>EP<br>JP<br>US<br>WO | 10029714 A1<br>1295029 A1<br>2004503711 A<br>2002163197 A1<br>0196735 A1 | 20-12-2001<br>26-03-2003<br>05-02-2004<br>07-11-2002<br>20-12-2001 |
| EP 2148084 | A2 | 27-01-2010 | DE<br>EP | 102008040681 A1<br>2148084 A2 | 28-01-2010<br>27-01-2010 |
| US 2002124825 | A1 | 12-09-2002 | DE<br>EP<br>US | 10100525 A1<br>1221553 A2<br>2002124825 A1 | 18-07-2002<br>10-07-2002<br>12-09-2002 |
| US 3965403 | A | 22-06-1976 | GB<br>HK<br>US | 1482225 A<br>24378 A<br>3965403 A | 10-08-1977<br>19-05-1978<br>22-06-1976 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2770349